# EUROPEAN PATENT APPLICATION

(11) **EP 4 656 527 A1**
(43) Date of publication of application: **03.12.2025**
(21) Application number: 25179751.0
(22) Date of filing: 29.05.2025
(51) Int. Cl.: B64F 5/50, B25H 1/00, F01D 25/28

(54) **SUPPORT STAND ASSEMBLY FOR AIRCRAFT ENGINE**

(30) Priority: 30.05.2024 US 202418678740
(71) Applicant: PRATT & WHITNEY CANADA CORP., Longueuil, Québec J4G 1A1 (CA)
(72) Inventor: LACHANCE, Pierre-Luc, (01BE5) Longueuil, J4G 1A1 (CA); DALLAS, Matthew, (01BE5) Longueuil, J4G 1A1 (CA); ROTHER, Annie, (01BE5) Longueuil, J4G 1A1 (CA); BRISCOE, Cory, (01BE5) Longueuil, J4G 1A1 (CA); CAMERON, Scott, (01BE5) Longueuil, J4G 1A1 (CA); WIJESINGHE, Vishi, (01BE5) Longueuil, J4G 1A1 (CA); LAMARRE, Roch, (01BE5) Longueuil, J4G 1A1 (CA)
(74) Representative: Dehns

(57) **Abstract**

A support stand assembly (10) for an aircraft engine (30) is provided. The support stand assembly (10) includes a mounting structure (40) adapted to engage with and receive the aircraft engine (30) and a support stand (20) having a frame (50). Engine support members (60a, 60b) extend upwardly from opposed lateral sides of the frame (50). The engine support members (60a, 60b) have brackets (63a, 63b) at upper ends (62a, 62b) thereof. The brackets (63a, 63b) face toward one another and have slots (64a, 64b) defined therein. The mounting structure (40) is displaceable between an engaged position in which the mounting structure (40) is received in the slots (64a, 64b) to prevent relative movement between the mounting structure (40) and the support stand (20), and a disengaged position in which the mounting structure (40) is removed from the slots (64a, 64b).

## Description

### TECHNICAL FIELD

The invention relates generally to support stands for aircraft engines.

### BACKGROUND

When not mounted on an aircraft, aircraft engines may need to be temporarily stored or parked. For instance, an aircraft engine may need to be supported once the assembly process has been completed, when undergoing testing, or when maintenance or repairs are required. Existing solutions are often formed as part of the engine assembly, allowing for extensive manipulation of the engine once parked. These solutions may also be engine specific, and would thus not suitable for use with more than one engine. Improvements are thus desired.

### SUMMARY

According to an aspect of the present invention, there is provided a support stand assembly for an aircraft engine, comprising: a mounting structure adapted to engage with and receive the aircraft engine; and a support stand having a frame and engine support members extending upwardly from opposed lateral sides of the frame, the engine support members having brackets at upper ends thereof, the brackets facing toward one another and having slots defined therein, the mounting structure being displaceable between an engaged position in which the mounting structure is received in the slots to prevent relative movement between the mounting structure and the support stand, and a disengaged position in which the mounting structure is removed from the slots.

Optionally, and in accordance with the above, the support stand assembly further includes an additional engine support member extending upwardly from the frame, the additional engine support member adapted to engage with the aircraft engine at an upper end of the additional engine support member.

Optionally, and in accordance with any of the above, the support stand assembly further includes tracks extending longitudinally along members of the frame, the additional engine support member being displaceable longitudinally along the tracks and between the engine support members extending upwardly from opposed lateral sides of the frame.

Optionally, and in accordance with any of the above, the support stand assembly further includes a track extending laterally between members of the frame, the additional engine support member displaceable laterally between the members of the frame along the track.

Optionally, and in accordance with any of the above, an engine attachment at an upper end of the additional support member is vertically displaceable relative to the frame.

Optionally, and in accordance with any of the above, an engine attachment at an upper end of the additional support member is removable and replaceable with another said additional support member.

Optionally, and in accordance with any of the above, the support stand assembly further includes a stabilizer mounted to the upper end of one of the engine support members, the stabilizer displaceable laterally along a track oriented towards the mounting structure and operable to engage with and provide stability to the mounting structure and/or the aircraft engine.

Optionally, and in accordance with any of the above, the mounting structure is a mounting ring having an annular frame, the aircraft engine receivable within the annular frame to secure the aircraft engine to the mounting ring, the annular frame received in the slots of the brackets in the engaged position.

Optionally, and in accordance with any of the above, the mounting structure includes a bracket attachment portion received in the slots in the engaged position, and an engine attachment portion operably coupled to the bracket attachment portion and operable to receive the aircraft engine.

Optionally, and in accordance with any of the above, the engine support members extend upwardly from a longitudinal midpoint of members of the frame.

Optionally, and in accordance with any of the above, a width of the slots remains constant from upper ends of the slots to lower ends of the slots.

Optionally, and in accordance with any of the above, a width of the slots decreases from upper ends of the slots to lower ends of the slots.

Optionally, and in accordance with any of the above, the slots have upper and side openings and are longitudinally aligned relative to the frame.

According to another aspect of the present invention, there is provided a support stand for an aircraft engine, comprising: a frame defining a base of the support stand; and engine support members extending upwardly from opposed lateral sides of the frame, the engine support members having brackets at upper ends thereof, the brackets facing towards one another and each including a pair of spaced-apart walls defining a slot therebetween, the slot having a width defined between the pair of spaced apart walls corresponding to a width of a mounting structure operatively connected to the aircraft engine and receivable in the slot.

Optionally, and in accordance with any of the above, the support stand assembly further includes an additional engine support member extending upwardly from the frame, the additional engine support member adapted to engage with the aircraft engine at an upper end of the additional engine support member.

Optionally, and in accordance with any of the above, the support stand assembly further includes tracks extending longitudinally along members of the frame and an additional track extending laterally between the members of the frame, the additional support member displaceable longitudinally along the tracks and laterally along the additional track.

Optionally, and in accordance with any of the above, an engine attachment at an upper end of the additional support member is vertically displaceable relative to the frame.

Optionally, and in accordance with any of the above, an engine attachment at an upper end of the additional support member is removable and replaceable with another said additional support member.

Optionally, and in accordance with any of the above, the support stand assembly further includes a stabilizer mounted to the upper end of one of the engine support members, the stabilizer displaceable along a track oriented towards the mounting structure and operable to engage with and provide stability to the aircraft engine.

Optionally, and in accordance with any of the above, the width of the slots decreases from upper ends of the slots to lower ends of the slots.

According to another aspect of the present invention, there is provided a method for supporting aircraft engines, comprising: lowering a first engine of the aircraft engines into a receptacle of a support stand, the receptacle defined at upper ends of vertical support members extending upwardly from a frame of the support stand; subsequently to lowering the first engine of the aircraft engines into the receptacle, lifting the first engine of the aircraft engines out of the receptacle; and subsequently to lifting the first engine of the aircraft engines out of the receptacle, lowering a second engine of the aircraft engines into the receptacle.

Optionally, and in accordance with any of the above, lowering the first engine of the aircraft engines into the receptacle includes aligning a mounting ring supporting the first engine of the aircraft engines with slots in the receptacle.

Optionally, and in accordance with any of the above, lowering the second engine of the aircraft engines into the receptacle includes aligning a mounting ring supporting the second engine of the aircraft engines with slots in the receptacle, the mounting ring of the second engine of the aircraft engines having a different geometry than the mounting ring of the first engine of the aircraft engines.

### BRIEF DESCRIPTION OF THE DRAWINGS

Reference is now made to the accompanying figures in which:
FIGS. 1A and 1B are perspective and exploded perspective view of a support stand assembly for an aircraft engine, according to an embodiment;
FIG. 1C is a perspective view of the support stand of FIG. 1A and a mounting ring for an aircraft engine without an installed engine;
FIG. 2 is a perspective view of the support stand of FIG. 1A;
FIG. 3 is an enhanced perspective view of a vertical engine support member for the support stand of FIG. 1A;
FIG. 4 is a perspective view of the vertical engine support member for the support stand of FIG. 1A;
FIG. 5 is an exploded perspective view of the vertical engine support member of FIG. 3;
FIGS. 6A-6B are enhanced perspective views of different exemplary attachments for the vertical engine support member of FIG. 3;
FIG. 7 is a perspective view of a support stand assembly for an aircraft engine, according to another embodiment;
FIG. 8 is an enhanced perspective view of the support stand of FIG. 7;
FIG. 9 is a perspective view of a support stand assembly for an aircraft engine, according to yet another embodiment;
FIG. 10 is an enhanced perspective view of the support stand of FIG. 9; and
FIG. 11 is a cross-sectional view of an exemplary bracket of the support stand of any of FIGS. 1-10.

### DETAILED DESCRIPTION

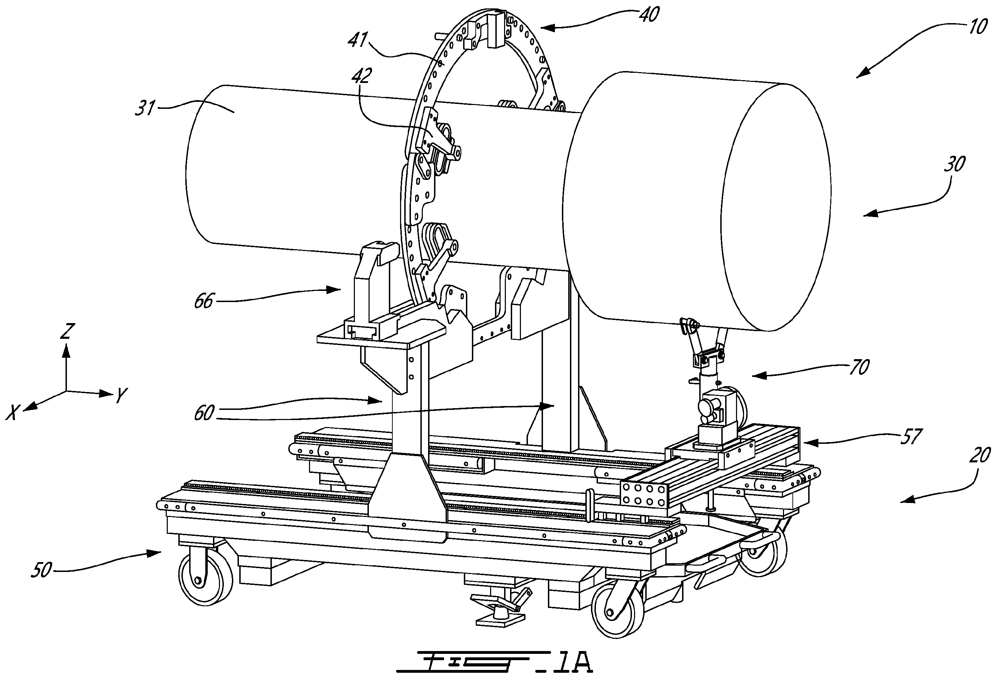

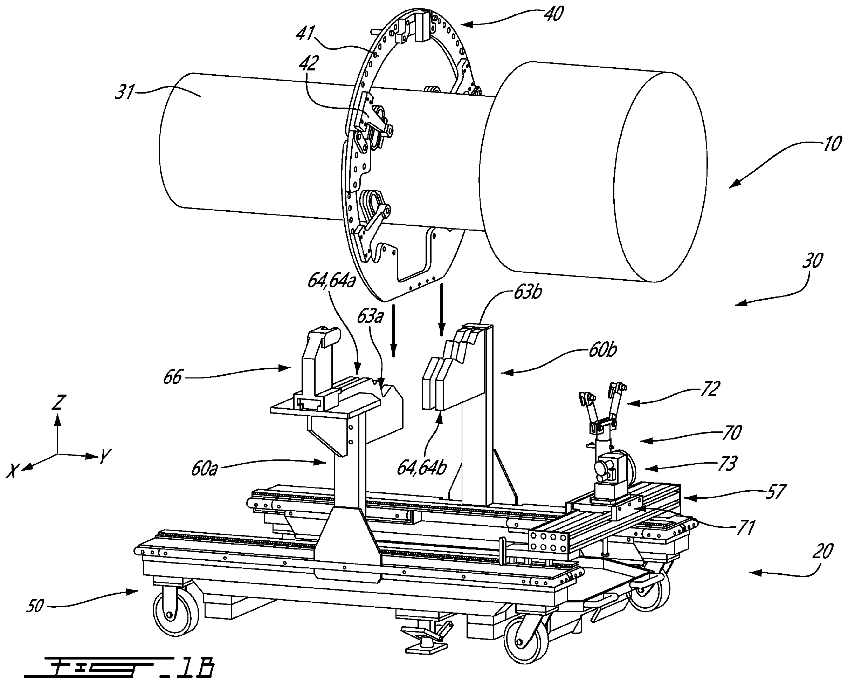

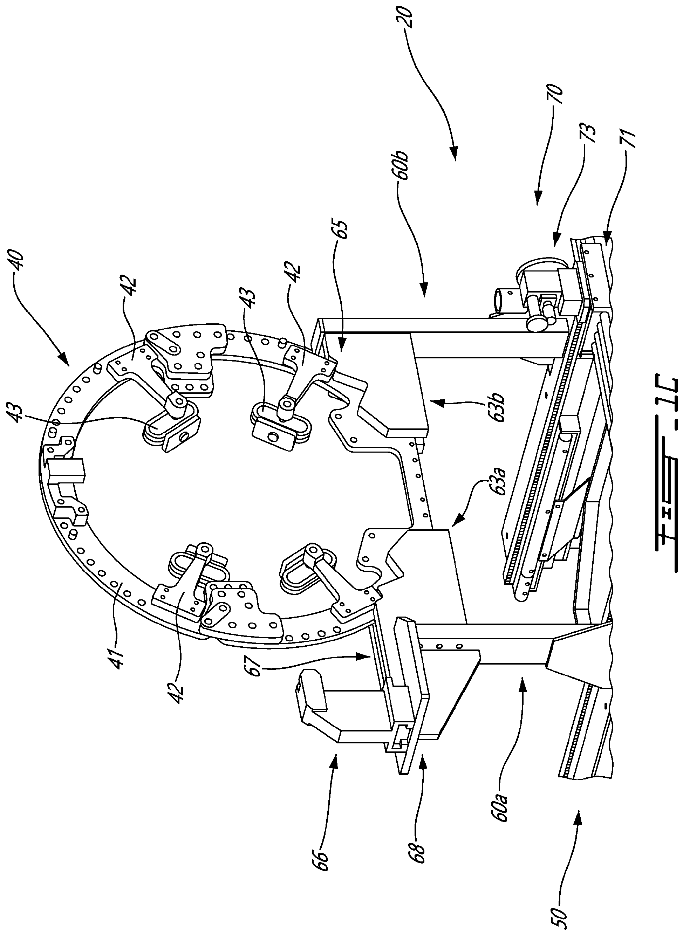

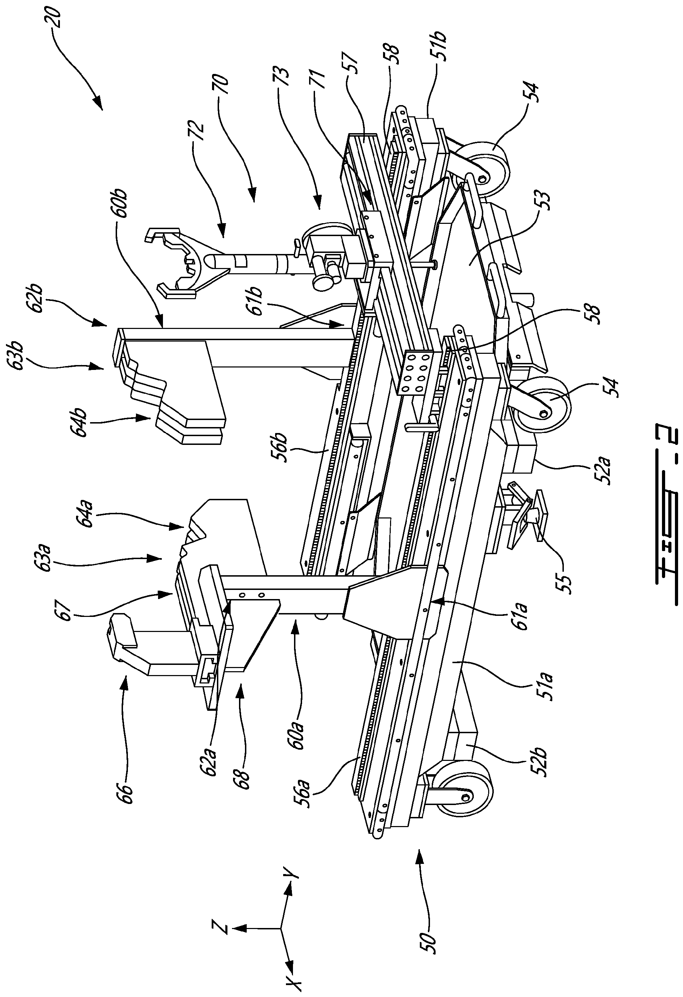

Referring to FIGS. 1A-1C, there is shown a support stand assembly 10 for an aircraft engine, which includes a support stand 20 operable to support an aircraft engine 30. This provided support may be temporary, for instance, to perform maintenance or testing on the engine 30, or to otherwise allow the engine 30 to be "parked", which may be desired after manufacturing has been completed, during a repair or overhaul process, or the like. The support stand 20 may thus be referred to as a parking stand, as an engine 30 may rest (i.e., in a parked or fixed state) on the stand 20 for a given period of time. The support stand 20 is operable to support a partially or fully built engine 30. The support stand 20 may be referred to as a universal or quasi-universal support stand, as it is operable to support various sizes and types of aircraft engines 30. The engine 30 is disposed in a mounting ring 40 that engages with and is received by the support stand 20, with the support stand 20 operable to receive various shapes, sizes and types of mounting rings 40. As shown in FIG. 1B, the mounting ring 40 is sized and may be lowered into corresponding slots 64 (which comprise opposed first and second slots 64a and 64b, respectively defined in the mounting brackets 63a and 63b) of the support stand 20, so the support stand 20 can support the engine 30. FIG. 1C shows the mounting ring 40 supported by the support stand 20 without an installed engine 30, to better demonstrate the various features of the mounting ring 40. Other devices for mounting the engine 30 to the support stand may be contemplated, as will be discussed in further detail below. The mounting ring 40 (or other like mounting structure) is thus displaceable between an engaged position (e.g., FIG. 1A) in which the mounting ring 40 is received in the slots 64 (i.e., slots 64a, 64b in FIG. 2) to prevent relative movement between the mounting ring 40 and the support stand 20, and a disengaged position (e.g., FIG. 1B) in which the mounting ring 40 is removed from the slots 64.

Referring additionally to FIG. 2, the support stand 20 is shown, with reference to lateral X axis, longitudinal Y axis, and vertical Z axis. It is understood that below-described directionality of support stand 20 with respect to the X, Y and Z axes is relative, and other orientations may be contemplated. The depicted support stand 20 includes a frame 50 defining a base of the support stand 20, central engine support members 60 extending upwardly from the frame 50, and an additional engine support member 70. In some embodiments, the additional engine support member 70 may be omitted.

The frame 50 illustratively includes a pair of spaced apart horizontal frame members 51a, 51b (other numbers of frame members 51 may be contemplated). The depicted horizontal frame members 51a, 51b are spaced apart laterally and extend, in parallel, longitudinally along the Y axis. While the depicted horizontal frame member 51a, 51b are shown to be substantially similar (i.e., having the same dimensions), in other embodiments the frame members 51a, 51b are dimensioned differently from one another and/or extend in a non-parallel fashion relative to one another. Various frame 50 configurations may thus be contemplated.

In the shown case, each frame member 51a, 51b comprises a plurality of stacked beams of varying lengths. Other configurations for the frame members 51a, 51b may be contemplated, for instance each frame member 51a, 51b including only a single beam. The shown frame illustratively includes a pair of cross members 52a, 52b disposed below the horizontal frame member 51a that operatively couple the pair of horizontal frame members 51a, 51b together. The depicted cross members 52a, 52b are substantially similar, are spaced apart longitudinally, and extend perpendicularly to the horizontal frame members 51a, 51b. Other configurations for the cross members 52a, 52b may be contemplated. An optional tray 53 is illustratively provided. The depicted tray 53 is disposed above the cross members 52a, 52b and extends between the horizontal frame members 51a, 51b along the entire lengths of the horizontal frame members 51a, 51b. Other tray 53 configurations may be contemplated. The tray 53 may, for instance, be operable to catch any parts or fluids that fall from the supported engine 30. The depicted frame 50 further includes a set of optional wheels 54 (illustratively four caster wheels) operatively coupled to the horizontal frame members 51a, 51b to facilitate displacement of the support stand 20, and an optional floor lock 55 operatively coupled to the frame for safety and stability considerations when the support stand 20 is stationary. In the shown case, a pair of tracks 56a, 56b are disposed on upper surfaces of the horizontal frame members 51a, 51b, extending longitudinally along the lengths thereof. These tracks 56a, 56b are operable to slidingly or rollingly support an additional track 57 operable to support the additional engine support member 70, as will be discussed in further detail below.

Still referring to FIG. 2, a pair of central engine support members 60 are operably coupled to and extend vertically upward (i.e., along the Z axis) from the horizontal frame members 51. Illustratively, a first engine support member 60a is coupled to the first horizontal frame member 51a at a first (or lower) end 61a of the first engine support member 60a, and a second engine support member 60b is coupled to the second horizontal frame member 51b at a first (or lower) end 61b of the second engine support member 60b. The engine support members 60a, 60b are thus spaced apart laterally and are illustratively disposed from the longitudinal centers or midpoints of the horizontal frame members 51a, 51b relative to the Y axis. It is understood that the engine support members 60a, 60b may be disposed slightly fore and aft of the precise longitudinal midpoints of the horizontal frame members 51a, 51b according to the present invention. Other locations along the horizontal frame members 51a, 51b from which the engine support members extend upwardly may be contemplated.

The central engine support members 60a, 60b includes brackets 63a, 63b at upper ends 62a, 62b thereof. The brackets 63a, 63b, which are collectively referred to as a receptacle, are operable to receive the mounting ring 40 (or other like mounting structure) so that the support stand 20 may support the engine 30. In the shown case, the brackets 63a, 63b are substantially similar to one another and are facing one another, and laterally spaced apart from each other, for instance to receive a symmetrical mounting ring 40. In other cases, the brackets 63a, 63b may be sized and shaped differently from one another.

In the shown case, the brackets 63a, 63b are operatively coupled to inner sides of respective support members 60a, 60b (i.e., sides of the support members 60a, 60b that face one another) towards the upper ends 62a, 62b thereof. Other mounting configurations may be contemplated. Each bracket 63a, 63b includes a slot 64a, 64b operable to receive the mounting ring 40 (or other like mounting structure). In the shown case, the slots 64a, 64b are open at their upper ends, open at their sides facing one another, open or closed at their bottom ends, and longitudinally aligned relative to the support stand 20. In other words, the slots are aligned such that they face each other and are located at the same fore-aft location along the support stand. The slots have a width that corresponds to, but is slightly greater than, a width of the mounting ring 40, such that the mounting ring 40 is slidingly received into the slots.

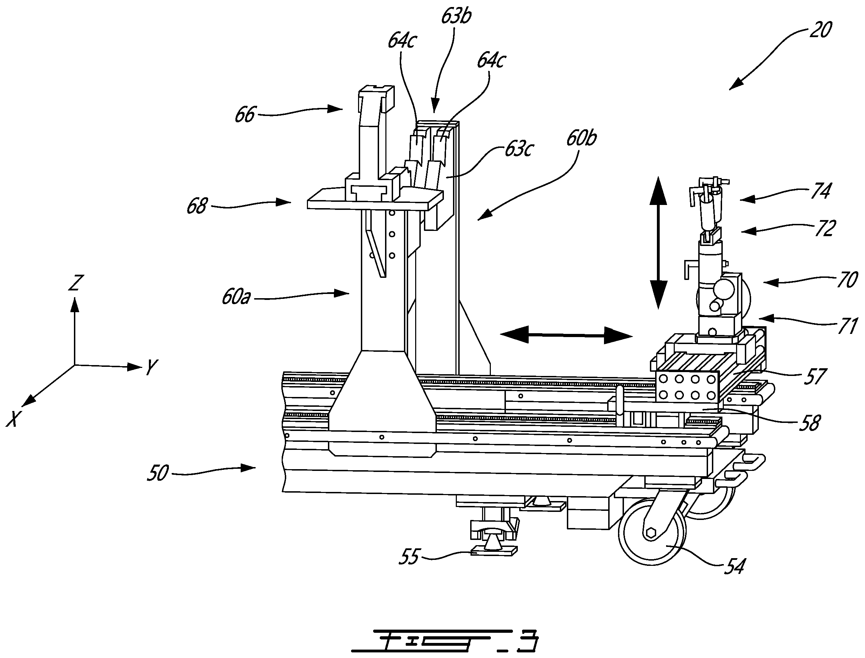

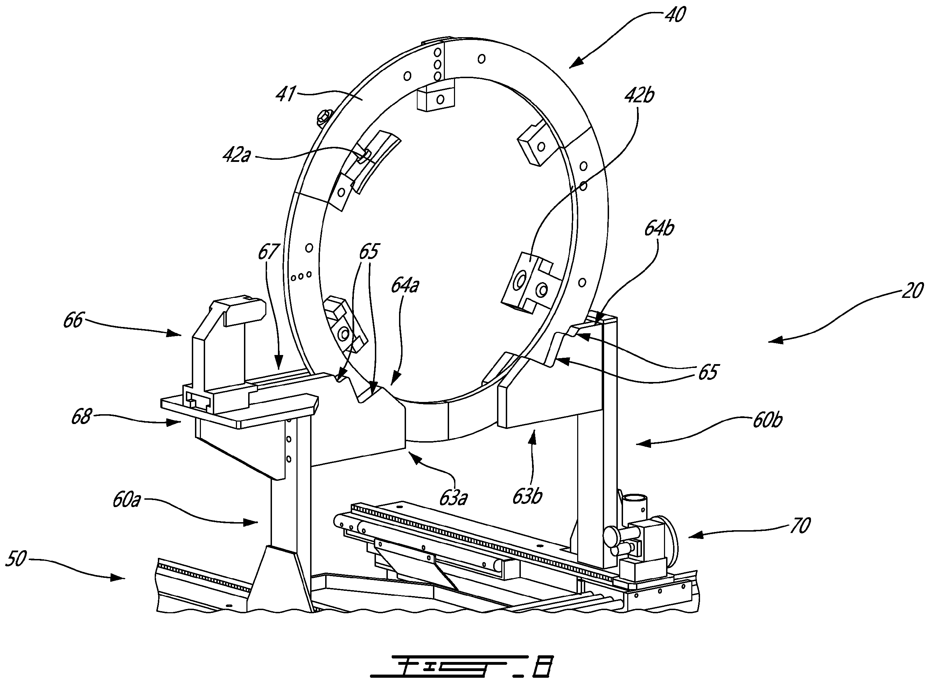

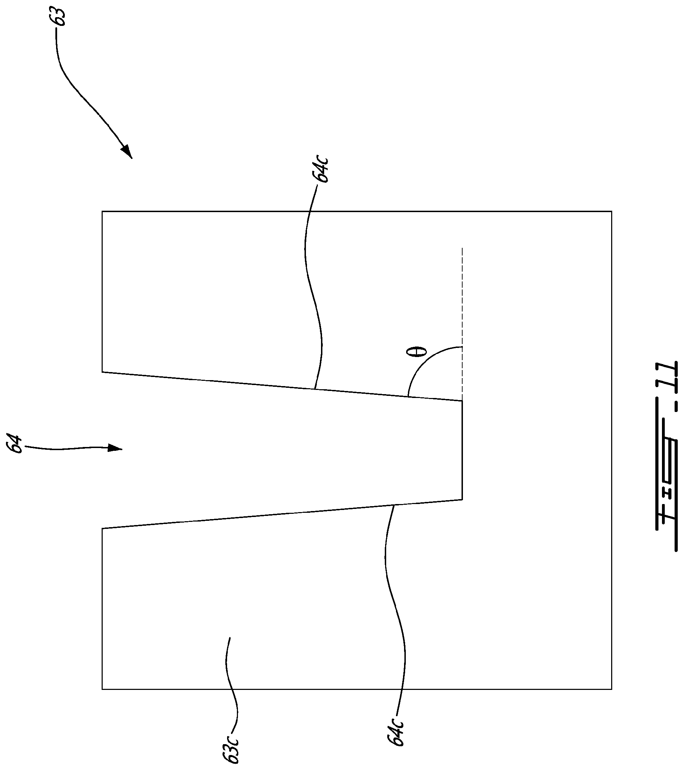

Referring additionally to FIG. 3, the bracket 63 includes a body 63c formed of two spaced apart walls 64c defining the slot 64. In the shown embodiment, the spaced-apart walls 64c are arranged vertically and in parallel to each other. Stated differently, in this embodiment, a width of the slots 64 remains constant from upper ends of the slots 64 to lower ends of the slots 64. In other embodiments, a width of the slots 64a, 64b tapers or narrows (i.e., in the longitudinal direction) from the upper ends of the slots 64a, 64b to the lower ends of the slots 64a, 64b, for instance to accommodate mounting rings 40 of different widths (see FIG. 11). As such, the mounting ring 40 is snugly received in the slots 64a, 64b to support the engine 30 in a secure manner, with the force of gravity maintaining the engine 30 in place. Fasteners are optionally provided to further retain the mounting ring 40 in the slots 64a, 64b. In the shown embodiment, cutouts 65 are provided in the brackets 63a, 63b (see FIG. 8). Each bracket 63a, 63b illustratively includes an upper and a lower cutout 65, with the lower cutout 65 being larger than the upper cutout 65. The cutouts 65 may provide further engagement between the mounting ring 40 and the brackets 63a, 63b, as will be discussed in further detail below.

In the shown embodiment, although not necessarily the case in all embodiments, a stabilizer 66 is provided atop one of the engine support members 60 adjacent a bracket 63. Illustratively, the stabilizer 66 is mounted to a track 67 disposed on an extension 68 of the upper end 62a of the first engine support member 60a. The extension 68, also referred to as a platform, can be a separate component that is operatively coupled to the first support member 60a, or can be integrally formed with the first support member 60a. The track 67 is illustratively oriented laterally (i.e., along the X axis) so that the stabilizer 66 is displaceable towards and away from the supported engine 30, for instance to provide additional stability and rigidity to the engine 30 and/or to the mounting ring 40 (see, e.g., FIG. 8). In other cases, the stabilizer 66 may be omitted. In further cases, a stabilizer 66 may be provided atop each of the engine support members 60.

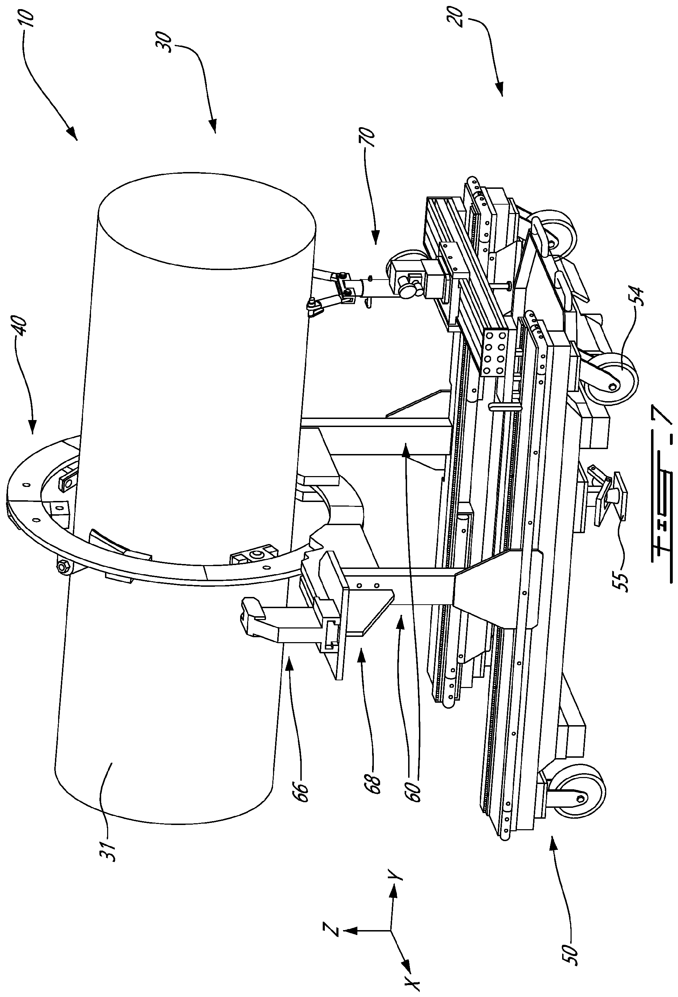

Referring to FIGS. 1A-1C, an exemplary mounting ring 40 is shown. The depicted mounting ring 40 includes an annular frame 41 and a plurality of engine brackets 42 mounted to the annular frame 41 and extending radially inwardly. The engine 30 is receivable within the annular frame 41 and supported by the engine brackets 42 The shown annular frame 41 includes a flat portion at a lower section thereof, although this is optional (i.e., the annular frame 41 may be fully circular). The number, style and circumferential position of the engine brackets 42 may vary, for instance based on the type of engine 30 to be supported. In the shown case, four engine brackets 42 are provided about the circumference of the annular frame 41. Engine attachments 43 are disposed at inner ends of the engine brackets 42 for attachment to a nacelle 31 of the engine 30 (as shown more specifically in FIG. 7). The engine attachments 43 are operable to abut or engage the nacelle 31 to operatively couple the engine 30 to the mounting ring 40. Illustratively, two of the engine brackets 42 are received within the upper cutouts 65 in the bracket 63a, 63b for additional support. As shown in FIG. 1B, the engine 30 may first be retained in the mounting ring 40 before the mounting ring 40 is lowered vertically into the brackets 63a, 63b to be supported by the support stand. Various sizes and configurations of mounting rings 40 may be contemplated, as will be discussed in further detail below.

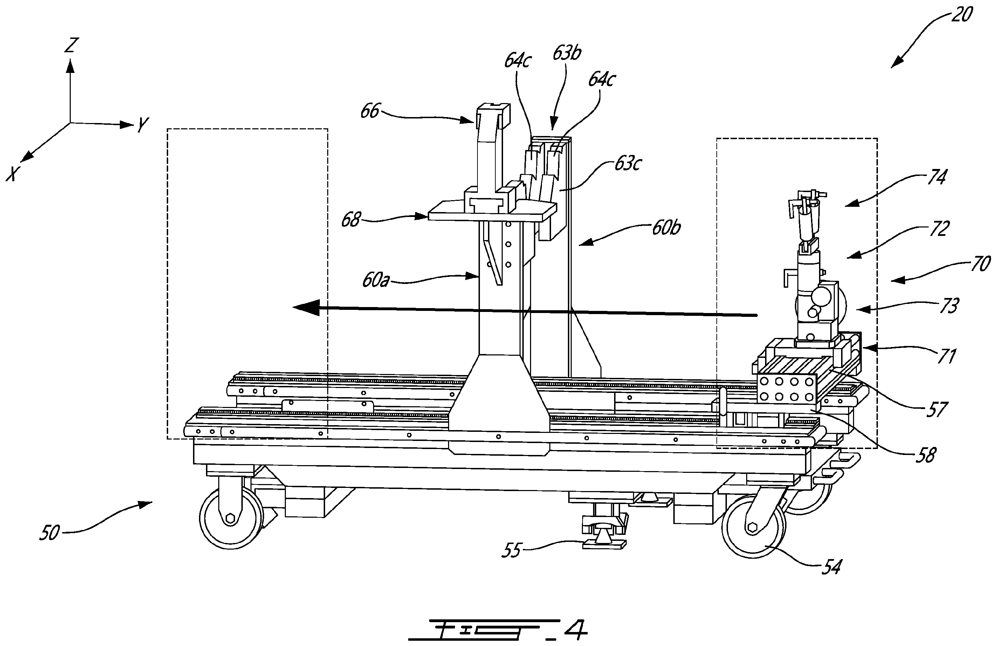

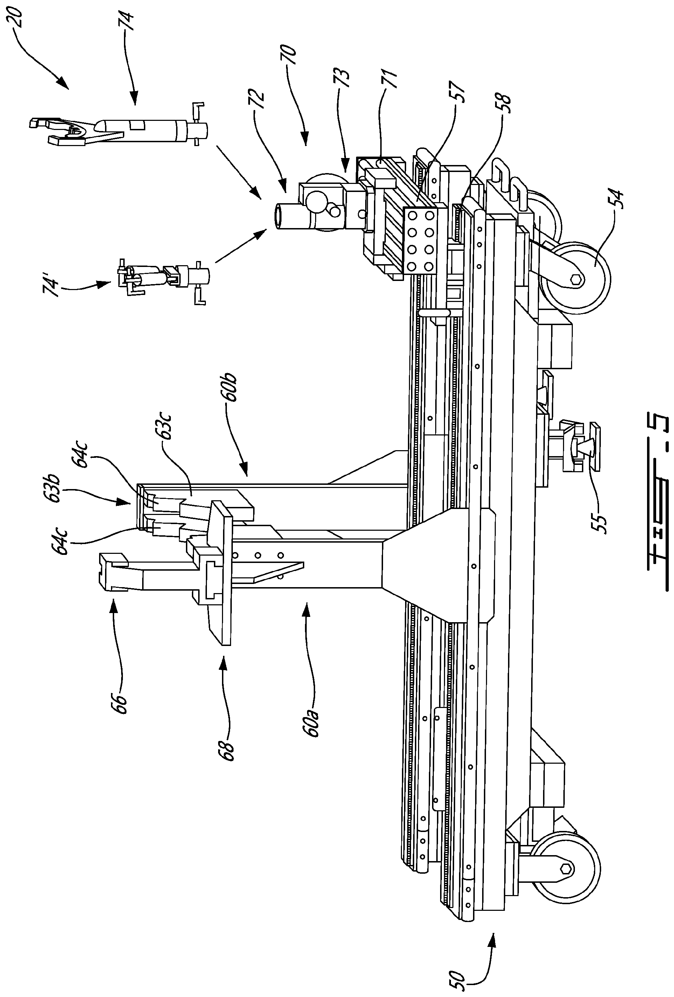

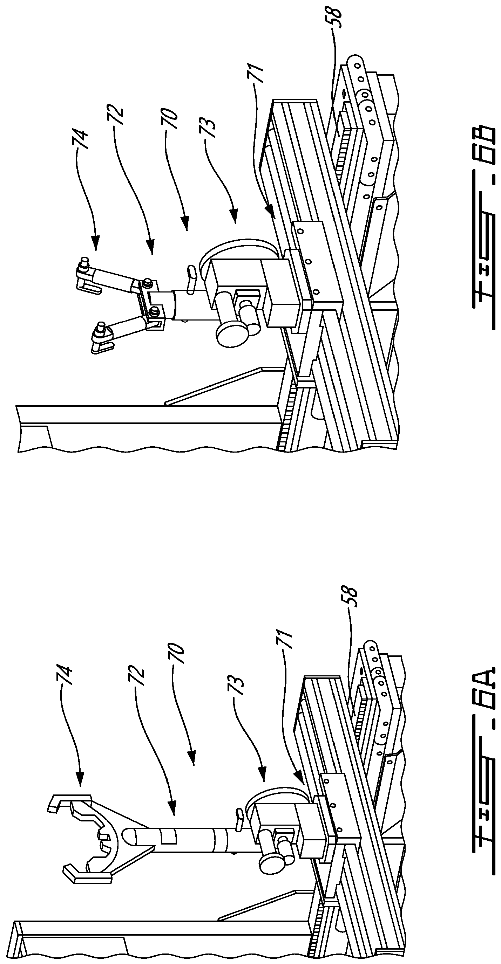

Referring to FIGS. 1A-4, as discussed above, an optional additional engine support member 70 is illustratively provided. The additional engine support member 70 may provide additional support to the engine 30. In some cases, certain engines 30 may require additional support beyond that provided by the brackets 63a, 63b, for instance due to the size, weight, shape or configuration of the engine 30. The depicted additional engine support member 70 includes a base 71 slideable along the additional track 57 and a height adjustable support 72 extending upwardly from the base 71 and engageable with the nacelle 31. In the shown embodiment, a lifting mechanism 73, for instance an exemplary jack-screw assembly, is provided for vertically displacing the height adjustable support 72. An attachment 74 is provided at an upper end of the height adjustable support for engaging the nacelle 31. Various configurations for the attachment 74, 74' may be contemplated, as shown in FIGS. 6A-6B. In some cases, the attachment 74 is removable from the height adjustable support 72, for instance in cases where it is not needed or to replace the attachment 74 with another attachment 74' (see FIGS. 5-6B). The adjustable height of the height adjustable support 72 as well as the various attachments 74, 74' may allow the height adjustable support 72 to adapt to various engine 30 configurations.

Referring now to FIGS. 2-4, the additional engine support member 70 is illustratively displaceable relative to the frame 50 in various directions. The additional engine support member 70 may displace laterally (i.e., along the X axis) with respect to the frame 50 via the base 71 sliding or rolling along the additional track 57, the additional track 57 extending laterally between horizontal frame members 51a, 51b. In addition, the additional engine support member 70 may displace longitudinally (i.e., along the Y axis) with respect to the frame 50 via supports 58 underneath the additional track 57 being operable to roll or slide along the tracks 56a, 56b. In the shown case, the tracks 56a, 56b are positioned laterally inwardly of respective central engine support members 60a, 60b so that the additional engine support member 70 may displace longitudinally from one longitudinal end of the frame 50 to another (i.e., without any encumbrance by the central engine support members. The additional engine support member 70, and in particular the attachment 74, may further be displaceable vertically (i.e., along the Z axis) by way of the lifting mechanism 73. Such displacements may, for instance, allow the additional support member 70 to be strategically placed to best support the engine 30, for instance by engaging the nacelle 31 at a location to best complement the support provided by the central engine support members 60. Other displacements of the additional engine support member 70 may be contemplated.

Referring to FIGS. 7-8, another embodiment of the present invention is shown, with the mounting ring 40 having a different configuration than the mounting ring 40 shown in FIGS. 1A-1C. Unless otherwise specified, like reference numerals refer to like elements. The annular frame 41 of the mounting ring of FIGS. 7-8 is fully circular, although this is optional. In addition, various engine brackets 42a, 42b are shown, for instance to engage with different portions of the nacelle 31. In various embodiments, different types of engine brackets 42, 42a, 42b are interchangeable based on the engine 30 to be supported. In addition, the engine brackets 42b are receivable in the lower of the cutouts 65 in the brackets 63a, 63b. It is understood that various combinations of the features of the various disclosed mounting rings 40 in the present invention may be contemplated.

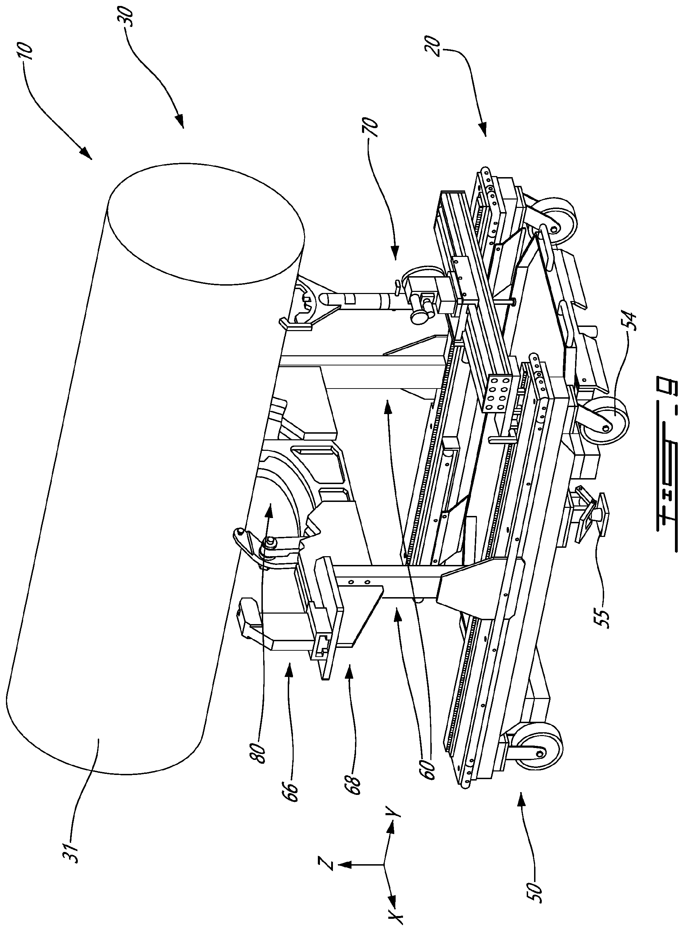

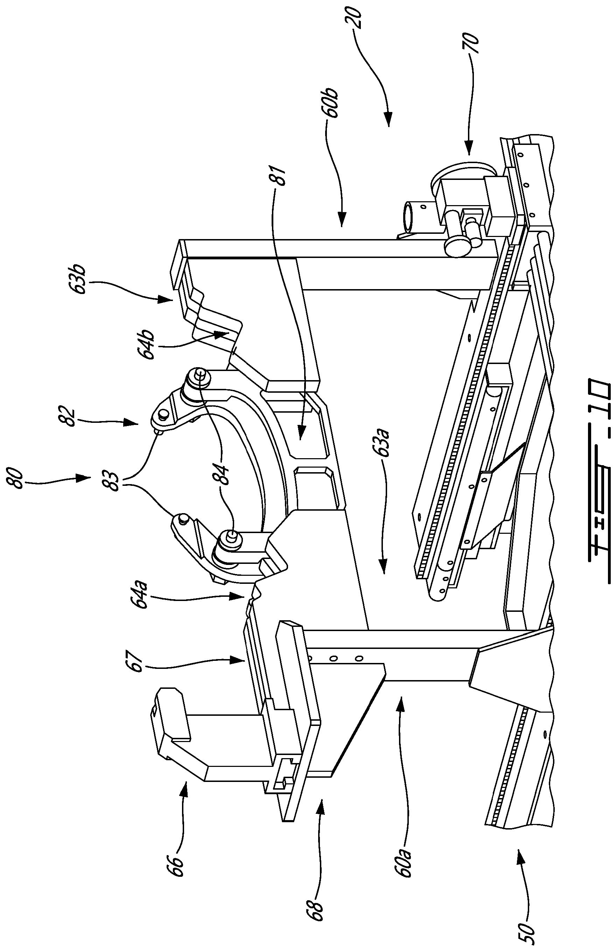

Referring to FIGS. 9-10, in another embodiment, the above-described mounting rings 40 may be substituted for an engine mount 80 that is received in the brackets 63a, 63b and is operable to support the engine 30. Unless otherwise specified, like reference numerals refer to like elements. In the shown embodiment, the engine mount 80 includes a bracket attachment portion 81 that is received in the slots 64a, 64b of brackets 63a, 63b, for instance in the same manner in which the above-described mounting rings 40 were received in the brackets 63a, 63b. Fasteners are optionally provided to further retain the engine mount 80 in the slots 64a, 64b. In addition, the engine mount 80 includes an engine attachment portion 82 operable to engage with and support the nacelle 31 of the engine 30. The shown engine attachment portion 82 has a horseshoe-like shape and includes fasteners 83 at extremities thereof, although these are merely options. In some cases, the engine attachment portion 82 is adjustable, for the width between extremities, to adapt for different engine 30 sizes and types. In the shown case, the bracket attachment portion 81 and engine attachment portion 82 are distinct components, illustratively coupled together via fasteners. Other arrangements may be contemplated, for instance an integrally formed bracket attachment portion 82 and engine attachment portion. In some embodiments, the engine mount 80 may first be inserted into the brackets 63a, 63b before an engine 30 is inserted to the engine mount 80, for instance by lowering the engine 30 into the engine mount 80. In other cases, the engine 30 is inserted or mounted to the engine mount 80 as a first step, before the combined engine 30 and engine mount 80 are lowered into the brackets 63a, 63b, as was the case with the above-described mounting rings 40. Other mounting configurations may be contemplated.

Referring to FIG. 11, a cross-sectional view of exemplary bracket 63 is shown in cross-sectional form. The bracket 63 includes a body 63c formed of two spaced apart walls 64c defining the slot 64. In the shown case, the spaced apart walls 64c are connected at a bottom of the slot 64. In other cases, the slot 64 is partially or fully open at the bottom of the slot 64. In the shown case, the walls 64c are tapered so that a width of the slot 64 decreases from an upper end of each slot 64 towards a lower end of each slot 64, for instance to allow the slot 64 to receive various sized mounting rings 40 or other like mounting structures. A taper angle θ of the inner walls 64c relative to a bottom of the slot 64 may vary. In an embodiment, the taper angle θ is approximately 40 degrees. Other taper angles θ may be contemplated. For instance, as shown in FIG. 3, there is no taper angle θ (i.e., θ is zero degrees), and the walls 64c are disposed in parallel with a width between walls 64c remaining consistent along the height of the slot 64.

According to an exemplary embodiment of the present invention, there is provided a method for supporting aircraft engines 30. A first engine 30 of the aircraft engines 30 is lowered into a receptacle of a support stand 20, the receptacle defined at upper ends of engine support members 60 extending upwardly from a center of the support stand 20. Subsequently to lowering the first engine 30 of the aircraft engines 30 into the receptacle, the first engine 30 of the aircraft engines 30 is lifted out of the receptacle. Subsequently to lifting the first engine 30 of the aircraft engines 30 out of the receptacle, a second engine 30 of the aircraft engines 30 is lowered into the receptacle. In some embodiments, lowering the first engine 30 of the aircraft engines 30 into the receptacle includes aligning a mounting ring 40 supporting the first engine 30 of the aircraft engines 30 with slots 64 in the receptacle. In some embodiments, lowering the second engine 30 of the aircraft engines 30 into the receptacle includes aligning a mounting ring 40 supporting the second engine 30 of the aircraft engines with the slots 64 in the receptacle, the mounting ring 40 of the second engine 30 of the aircraft engines 30 having a different geometry than the mounting ring 40 of the first engine 30 of the aircraft engines 30. Various modifications to the above-described method steps may be further contemplated. For instance, the mounting ring(s) 40 of the first and/or second engine 30 may be replaced with the above-described engine mount(s) 80.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present invention are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present invention is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present invention have been disclosed, it will be apparent to those of ordinary skill in the art that many more embodiments and implementations are possible within the scope of the present invention. For example, the present invention as described herein includes several aspects and embodiments that include particular features. Although these particular features may be described individually, it is within the scope of the present invention that some or all of these features may be combined with any one of the aspects and remain within the scope of the present invention. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present invention, a person of ordinary skill in the art will recognize that changes may be made to the embodiments described herein without departing from the scope of the present technology. For instance, while the support stand 20 as described above is shown as being mounted to a displaceable frame 50, in other cases the engine support members 60, 70 can be mounted to a fixed structure such as the ground or a horizontal beam fixed to a wall. Yet further modifications could be implemented by a person of ordinary skill in the art in view of the present invention, which modifications would be within the scope of the present technology.

## Claims

1. A support stand assembly (10) for an aircraft engine (30), comprising:
a mounting structure (40) adapted to engage with and receive the aircraft engine (30); and
a support stand (20) having a frame (50) and engine support members (60a, 60b) extending upwardly from opposed lateral sides of the frame (50), the engine support members (60a, 60b) having brackets (63a, 63b) at upper ends (62a, 62b) thereof, the brackets (63a, 63b) facing toward one another and having slots (64a, 64b) defined therein, the mounting structure (40) being displaceable between an engaged position in which the mounting structure (40) is received in the slots (64a, 64b) to prevent relative movement between the mounting structure (40) and the support stand (20), and a disengaged position in which the mounting structure (40) is removed from the slots (64a, 64b).

2. The support stand assembly (10) as defined in claim 1, further comprising an additional engine support member (70) extending upwardly from the frame (50), the additional engine support member (70) adapted to engage with the aircraft engine (30) at an upper end of the additional engine support member (70).

3. The support stand assembly (10) as defined in claim 2, further comprising tracks (56a, 56b) extending longitudinally along members of the frame (50), the additional engine support member (70) being displaceable longitudinally along the tracks (56a, 56b) and between the engine support members (60a, 60b) extending upwardly from opposed lateral sides of the frame (50).

4. The support stand assembly (10) as defined in claim 2 or 3, further comprising a support member track (57) extending laterally between members of the frame (50), the additional engine support member (70) displaceable laterally between the members of the frame (50) along the support member track (57).

5. The support stand assembly (10) as defined in any of claims 2 to 4, wherein an engine attachment (74) at an upper end of the additional support member (70) is vertically displaceable relative to the frame (50).

6. The support stand assembly (10) as defined in any of claims 2 to 5, wherein an engine attachment (74) at an upper end of the additional support member (70) is removable and replaceable with another said additional support member (70).

7. The support stand assembly (10) as defined in any preceding claim, further comprising a stabilizer (66) mounted to the upper end (62a, 62b) of one of the engine support members (60a, 60b), the stabilizer (66) displaceable laterally along a stabilizer track (67) oriented towards the mounting structure and operable to engage with and provide stability to the mounting structure and/or the aircraft engine (30).

8. The support stand assembly (10) as defined in any preceding claim, wherein the mounting structure (40) is a mounting ring having an annular frame (41), the aircraft engine (30) receivable within the annular frame (41) to secure the aircraft engine (30) to the mounting ring (40), the annular frame (41) received in the slots (64a, 64b) of the brackets (63a, 63b) in the engaged position.

9. The support stand assembly (10) as defined in any preceding claim, wherein the mounting structure (40) includes a bracket attachment portion (81) received in the slots (64a, 64b) in the engaged position, and an engine attachment portion (82) operably coupled to the bracket attachment portion (81) and operable to receive the aircraft engine (30).

10. The support stand assembly (10) as defined in any preceding claim, wherein the engine support members (60a, 60b) extend upwardly from a longitudinal midpoint of members (51a, 51b) of the frame (50).

11. The support stand assembly (10) as defined in any preceding claim, wherein a width of the slots (64a, 64b) remains constant from upper ends of the slots (64a, 64b) to lower ends of the slots (64a, 64b).

12. The support stand assembly (10) as defined in any preceding claim, wherein a width of the slots (64a, 64b) decreases from upper ends of the slots (64a, 64b) to lower ends of the slots (64a, 64b).

13. The support stand assembly (10) as defined in any preceding claim, wherein the slots (64a, 64b) have upper and side openings and are longitudinally aligned relative to the frame (50).
